# EUROPEAN PATENT APPLICATION

(11) **EP 4 753 059 A2**
(43) Date of publication of application: **03.06.2026**
(21) Application number: 26164425.6
(22) Date of filing: 04.02.2021
(51) Int. Cl.: H01M 50/491

(54) **ELECTRODE ASSEMBLY, BATTERY CELL, BATTERY, AND MANUFACTURING METHOD AND DEVICE FOR AN ELECTRODE ASSEMBLY**

(62) Divisional of application: 21810267.1
(71) Applicant: Jiangsu Contemporary Amperex Technology Limited, Liyang, Jiangsu 213300 (CN)
(72) Inventor: TENG, Guopeng, Changzhou, Jiangsu, 213300 (CN); HUA, Xia, Changzhou, Jiangsu, 213300 (CN)
(74) Representative: Ran, Handong

(57) **Abstract**

Embodiments of the present application provide an electrode assembly, a battery cell, a battery, and a method and a device for manufacturing an electrode assembly, which belong to the technical field of batteries. Where, the electrode assembly includes a first electrode plate, a second electrode plate, and a support member. The first electrode plate and the second electrode plate are wound in a winding direction to form a winding structure, and the winding structure includes a bending area. At least a part of the support member is bent and arranged in the bending area, and the support member is configured to provide a support force to a part of the first electrode plate and/or the second electrode plate located at an outer side of the support member. The support member can provide a support force to the part of the first electrode plate and/or the second electrode plate located at the outer sided of the support member, that is, the support member can provide a support force to an electrode plate located at the outer side of the support member, so that the electrode plate at the outer side of the support member is not easy to shrink and deform inward, the structural stability of the entire electrode assembly is improved, and the battery performance is ensured.

## Description

### TECHNICAL FIELD

The present application relates to the technical field of batteries, and in particular, to an electrode assembly, a battery cell, a battery, and a manufacturing method and device for an electrode assembly.

### BACKGROUND

Currently, the most commonly used batteries in vehicles are lithium-ion batteries. As a kind of rechargeable battery, lithium-ion batteries have the advantages of small size, high energy density, high power density, multiple recycle times, and long storage time.

A rechargeable battery generally includes an electrode assembly and an electrolyte, and the electrode assembly is composed of a second electrode plate, a first electrode plate, and a separator. The operation of the rechargeable battery mainly relies on movement of metal ions between the second electrode plate and the first electrode plate.

For a general rechargeable battery, the electrode plates in the electrode assembly are prone to deformation, which in turn affects the battery performance.

### SUMMARY

Embodiments of the present application provide an electrode assembly, a battery cell, a battery, and a manufacturing method and device for an electrode assembly, so as to improve the problem that the electrodes in the electrode assembly are easily deformed, which in turn affects the performance of the battery.

In a first aspect, an embodiment of the present application provides an electrode assembly, including a first electrode plate, a second electrode plate, and a support member; where the first electrode plate and the second electrode plate are wound in a winding direction to form a winding structure, and the winding structure includes a bending area; and at least a part of the support member is bent and arranged in the bending area, and the support member is configured to provide a support force to a part of the first electrode plate and/or the second electrode plate located at an outer side of the support member.

In the above solution, a support member is provided in the winding structure, and at least a part of the support member is bent and arranged in the bending area. The support member can provide a support force to the part of the first electrode plate and/or the second electrode plate located at the outer sided of the support member, that is, the support member can provide a support force to an electrode plate located at the outer side of the support member and play a supporting role, so that the electrode plate at the outer side of the support member is not easy to shrink and deform inward, the structural stability of the entire electrode assembly is improved, and the battery performance is ensured.

In some embodiments, the winding structure further includes a straight area, and the straight area is connected to the bending area; and a part of the support member is arranged in the straight area.

In the above solution, a part of the support member is arranged in the straight area to support a part of the electrode plate located in the straight area and at an outer side of the support member. That is, the support member can not only support the part of the electrode plate in the bending area, but support the part of the electrode plate in the straight area, so that the support member has a better support effect to the electrode plate.

In some embodiments, the support member includes a first support portion and a second support portion; and at least a part of the first support portion is bent and arranged in one bending area, and at least a part of the second support portion is bent and arranged in the other bending area.

In the above solution, at least a part of the first support portion is bent and arranged in one bending area, and at least a part of the second support portion is bent and arranged in another bending area. That is, the first support portion and the second support portion can respectively support the electrode plate in two bending areas so that the parts of the electrode plate located in the two bending areas are not easily deformed.

In some embodiments, the first support portion and the second support portion are an integral structure; or, the first support portion and the second support portion are independent of each other.

In the above solution, the first support portion and the second support portion can be an integral structure, so that the support member has good integrity, can simplify the structure of the support member, and is easy to form and manufacture; the first support portion and the second support portion may also be independent of each other, and the support member is a multi-segment split structure, which can effectively reduce an amount of the support member and achieve the purpose of saving materials.

In some embodiments, an electrode plate located at the innermost side of the bending area is supported by at least a part of the first support portion and/or at least a part of the second support portion.

In the above solution, if the first support portion supports at least a part of the electrode plate located at the innermost side of the bending area, the first support portion can provide a support force to the electrode plate from the innermost side of the bending area; if the second support portion supports at least a portion of the electrode plate located at the innermost side of the bending area, and the second support portion can provide a support force to the electrode plate from the innermost side of the bending area.

In some embodiments, the electrode plate at the innermost side of the bending area is a first electrode plate, and at least a part of the support member is bent and arranged in the bending area, and the first electrode plate at the innermost part of the bending area is supported by the support member.

In the above solution, the electrode plate at the innermost side of the bending area is the first electrode plate, and the part of the first electrode plate located in the innermost part of the bending area is supported by the part of the support member that is bent and arranged in the bending area, so that the part of the support member bent and arranged in the bending area can provide a support force to the first electrode plate from the innermost side of the bending area, so that a innermost circle or even multiple circles in the winding structure are not easily deformed.

In some embodiments, the electrode plate at the innermost side of the bending area is a first electrode plate, and the first electrode plate includes a first segment and a second segment bordering the first segment, the first segment exceeds an winding start end of the second electrode plate, and the first segment is wound along the winding direction from an winding start end of the first electrode plate around the bending area, and the second segment is continuously arranged with the first segment along the winding direction; and the support member includes a third support portion, the second segment has an outer side portion located at an outer side the first segment and adjacent to the first segment, and at least a part of the third support portion is bent and arranged in the bending area and located between the outer side portion and the first segment.

In the above solution, the support member includes a third support portion, and the part of the third support portion that is bent and arranged in the bending area is located between the second segment and the first segment. On one hand, the third support portion fills at least a part of the gap between the first segment and the second segment, to ensure the uniformity of the thickness of the entire electrode assembly; on the other hand, the part of the third support portion that is bent and arranged in the bending area can provide a support force to the second segment.

In some embodiments, one end of the third support portion is attached to the winding start end of the second electrode plate.

In the above solution, one end of the third support portion is attached to the winding start end of the second electrode plate, which eliminates the gap between the end of the third support portion and the winding start end of the second electrode plate, and increases a support span of the third support portion to the second segment, so that the third support portion has a better support capacity for the second segment.

In other embodiments, the first electrode plate is a negative electrode plate, and the second electrode plate is a positive electrode plate.

In some embodiments, the second electrode plate includes a first lap that is wound one lap in the winding direction from the winding start end of the second electrode plate, and the support member is located in the first lap.

In the above solution, the support member is located in the first lap of the second electrode plate, which reduces the risk of the support member obstructing the lithium-ion transmission between the first electrode plate and the second electrode plate.

In some embodiments, the electrode assembly further includes a separator for isolating the first electrode plate from the second electrode plate, and the support member is fixed to the separator.

In the above solution, the separator performs the function of isolating the first electrode plate and the second electrode plate, and the risk of short circuit between the first electrode plate and the second electrode plate can be reduced. The support member is fixed to the separator, which improves the firmness of the support member in the winding structure.

In some embodiments, a material of the support member includes an elastic material.

In the above solution, the material of the support member includes an elastic material. That is, the support member is an elastic member, and the support member has the ability of elastic deformation and restoration of elastic deformation. The part of the support member that is bent and arranged in the bending area can provide an elastic force to the electrode plate at its outer side, so that the electrode plate has a tendency to expand outward, thereby reducing deformation amount of the electrode plate inward shrinking and deforming.

In some embodiments, the support member is provided with at least one through hole.

In the above solution, the support member is provided with at least one through hole. On one hand, the support member is compressible, and the compressed space can be configured to put more active substances in the battery cell, thereby increasing the capacity of the battery cell and volume energy density; on the other hand, the weight of the support member can be reduced.

In some embodiments, a porosity of the support member is 20%-90%.

In a second aspect, an embodiment of the present application provides a battery cell, including a shell and the electrode assembly according to any one of the embodiments of the first aspect; and the electrode assembly being accommodated in the shell.

In a third aspect, an embodiment of the present application provides a battery, including a box body, and the battery cell according to any of the embodiments of the second aspect; and the battery cell being accommodated in the box body.

In a fourth aspect, an embodiment of the present application provides a power consumption device, including the battery cell according to any of the embodiments of the second aspect.

In a fifth aspect, an embodiment of the present application provides a manufacturing method for an electrode assembly, the method including: providing a first electrode plate, a second electrode plate, and a support member; winding the first electrode plate and the second electrode plate along a winding direction to form a winding structure including a bending area; where at least a part of the support member is bent and arranged in the bending area, and the support member is configured to provide a support force to a part of the first electrode plate and/or the second electrode plate located at an outer side of the support member.

In the above solution, after the first electrode and the second electrode are wound in a winding direction to form a winding structure, and the winding member plays a role of supporting the electrode plate, so that support member can provide a support force to the part of the first electrode plate and/or the second electrode plate located at the outer sided of the support member, that is, the support member provides a support force to an electrode plate located at the outer side of the support member and play a supporting role, so that the electrode plate at the outer side of the support member is not easy to shrink and deform inward, the structural stability of the entire electrode assembly is improved, and the battery performance is ensured.

In some embodiments, an separator is provided for isolating the first electrode plate from the second electrode plate; and the first electrode plate, the separator, and the second electrode plate are wound along the winding direction to form the winding structure.

In the above solution, the first electrode plate, the separator, and the second electrode plate are wound along the winding direction to form a winding structure, and the separator performs the function of isolating the first electrode plate from the second electrode plate, which can reduce the risk of short circuit between the first electrode plate and the second electrode plate.

In some embodiments, the method further includes: fixing the support member to the separator, before the first electrode plate, the separator, and the second electrode plate are wound in the winding direction to form the winding structure.

In the above solution, before the first electrode plate, the separator, and the second electrode plate are wound in the winding direction to form a winding structure, the support member is fixed on the separator, and after the first electrode plate, the separator and the second electrode plate are wound along the winding direction to form a winding structure, the support can automatically support the electrode plates at its outer side.

In some embodiments, the support member is fixed to the separator by means of bonding, pressing or heat compounding.

In the above solution, the support member can be fixed to the separator by bonding, pressing or heat compounding, and the fixing method of fixing the support member to the separator is simple.

In sixth aspect, an embodiment of the present application further provides a manufacturing device for an electrode assembly, including:

a first providing apparatus, configured to provide a first electrode plate; second providing apparatus, configured to provide a second electrode plate; a third providing apparatus, configured to provide a support member; and an assembly apparatus, configured to wind the first electrode plate and the second electrode plate along a winding direction to form a winding structure; where the winding structure includes a bending area, at least a part of the support member is bent and arranged in the bending area, and the support member is configured to provide a support force to a part of the first electrode plate and/or the second electrode plate located at an outer side of the support member.

### BRIEF DESCRIPTION OF DRAWINGS

To describe the technical solutions in the embodiments of the present application more clearly, the following briefly describes the accompanying drawings required for the embodiments. Apparently, the accompanying drawings in the following description show merely some embodiments of the present application, and persons of ordinary skill in the art may still derive other drawings from these accompanying drawings without creative efforts.
FIG. 1 is a schematic structural diagram of a vehicle provided by some embodiments of the present application;
FIG. 2 is an exploded view of a battery provided by some embodiments of the present application;
FIG. 3 is a schematic structural diagram of a battery module shown in FIG. 2;
FIG. 4 is an exploded view of a battery cell shown in FIG. 3;
FIG. 5 is a schematic structural diagram of an electrode assembly provided by some embodiments of the present application;
FIG. 6 is another schematic structural diagram of an electrode assembly provided by other embodiments of the present application;
FIG. 7 is a schematic structural diagram of a support portion shown in FIG. 6;
FIG. 8 is a schematic structural diagram of an electrode assembly provided by yet other embodiments of the present application;
FIG. 9 is a schematic structural diagram of an electrode assembly provided by still other embodiments of the present application;
FIG. 10 is a schematic structural diagram of a third support portion shown in FIG. 9;
FIG. 11 is a schematic structural diagram of an electrode assembly provided by yet other embodiments of the present application;
FIG. 12 is a flowchart of manufacturing method for an electrode assembly provided by some embodiments of the present application; and
FIG. 13 is a schematic block diagram of manufacturing device for an electrode assembly provided by some embodiments of the present application.

In the drawings, the drawings are not drawn to actual scale.

Description of signs: 10-battery cell; 11-shell; 12-housing; 112-cover body; 113-sealed space; 12-electrode assembly; 121-first electrode plate; 1210-first winding start end; 1211-first segment; 1212-second segment; 1213-first junction; 122-second electrode plate; 1220-second winding start end; 1222-first lap; 123-support member; 1231-first support portion; 1231a-first straight portion; 1231b-first bending portion; 1231c-second straight portion; 1232-second support portion; 1233-third support portion; 1233a-third straight portion; 1233b-second bending portion; 1233c-fourth straight portion; 124-separator; 13-positive electrode terminal; 14-negative electrode terminal; 15-pressure relief mechanism; 20-box body; 21-first portion; 22-second portion; 23-accommdating space; 30-battery module; 31-busbar component; 100-battery; 200-controller; 300-motor; 1000-vehicle; 2000-manufacturing device; 2100-first providing apparatus; 2200-second providing apparatus; 2300-third providing apparatus; 2400-assembly apparatus; A-winding direction; B-bending area; and C-straight area.

### DESCRIPTION OF EMBODIMENTS

To make the objectives, technical solutions and advantages of the embodiments of the present application clearer, the following clearly describes the technical solutions in the embodiments of the present application with reference to the accompanying drawings in the embodiments of the present application. Apparently, the described embodiments are merely some but not all of the embodiments of the present application. All the other embodiments obtained by those of ordinary skill in the art based on the embodiments of the present application without any inventive effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "including" and "having" and any variations thereof in the specification and the claims of the present application as well as the foregoing description of the accompanying drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiments" referred to in the present application means that the descriptions of specific features, structures, and characteristics in combination with the embodiments are included in at least one embodiment of the present application. The phrase at various locations in the specification does not necessarily refer to the same embodiment, or an independent or alternate embodiment that is mutually exclusive from another embodiment.

In the description of the present application, it should be noted that unless otherwise explicitly specified and defined, the terms "mounting", "connecting", "connection" and "attaching" should be understood in a broad sense, for example, they may be a fixed connection, a detachable connection, or an integrated connection; may be a direct connection and may also be an indirect connection via an intermediate medium, or may be communication between the interiors of two elements. A person of ordinary skill in the art may understand the specific meanings of the foregoing terms in the present application according to specific circumstances.

In the present application, the term "and/or" is only an association relation describing associated objects, which means that there may be three relations. For example, A and/or B may represent three situations: A exists alone, both A and B exist, and B exists alone. In addition, the character "/" in the present application generally indicates that the associated objects before and after the character are in an "or" relation.

In the embodiments of the present application, same components are denoted by same reference numerals, and detailed description of the same components is omitted in different embodiments for brevity. It should be understood that dimensions such as thicknesses, lengths and widths of various components in embodiments of the present application shown in the drawings, as well as dimensions of the overall thickness, length and width of an integrated apparatus are merely illustrative, and should not constitute any limitation to the present application.

In the present application, "a plurality of" means two or more (including two).

In the present application, battery cells may include lithium-ion secondary batteries, lithium-ion primary batteries, lithium-sulfur batteries, sodium/lithium-ion batteries, sodium-ion batteries or magnesium-ion batteries, etc., which are not limited by the embodiments of the present application. The battery cells may be cylindrical, flat, cuboid or in another shape, which is not limited by the embodiments of the present application. The battery cells are generally divided into three types according to the way of packaging: cylindrical battery cells, prismatic battery cells and pouch battery cells, which are not limited by the embodiments of the present application.

The battery mentioned in the embodiment of the present application refers to a single physical module that includes one or more battery cells to provide a higher voltage and capacity. For example, the battery mentioned in the present application may include a battery module, a battery pack, or the like. The battery generally includes a box body for enclosing one or more battery cells. The box body may prevent liquid or other foreign matters from affecting the charging or discharging of the battery cell.

The battery cell includes an electrode assembly and an electrolyte, and the electrode assembly is composed of a positive electrode plate, a negative electrode plate, and a separator. The operation of the battery cell mainly relies on the movement of metal ions between the positive electrode plate and the negative electrode plate. The positive electrode plate includes a positive electrode current collector and a positive active material layer. The positive active material layer is coated on a surface of the positive electrode current collector, and the positive electrode current collector not coated with the positive active material layer protrudes from the positive electrode current collector coated with the positive active material layer and is used as a positive electrode tab. As an example, in a lithium-ion battery, the material of the positive electrode current collector may be aluminum, and the positive active material may be lithium cobalt oxides, lithium iron phosphate, ternary lithium or lithium manganate, or the like. The negative electrode plate includes a negative electrode current collector and a negative active material layer. The negative active material layer is coated on a surface of the negative electrode current collector, and the negative electrode current collector not coated with the negative active material layer protrudes from the negative electrode current collector coated with the negative active material layer and is used as a negative electrode tab. The material of the negative electrode current collector may be copper, and the negative active material may be carbon or silicon, and like. In order to ensure that no fusing occurs when a large current passes, there are a plurality of positive electrode tabs which are stacked together, and there are a plurality of negative electrode tabs which are stacked together. A material of the separator may be polypropylene (PP) or polyethylene (PE), or the like. In addition, the electrode assembly may be a coiled structure or a laminated structure, and the embodiments of the present application are not limited thereto.

For a general battery cell, the electrode plates in the electrode assembly are prone to deformation, which in turn affects the battery performance.

The inventor found that in the battery cell, after the electrode assembly is wound (for example, after the winding needle at the winding core position of the electrode assembly is pulled out) and during the cycle of the battery cell, the electrode plate may have stress release, so that the electrode plate shrinks inward and deforms, and may even cause the electrode plate to be twisted, folded, broken, damaged, etc., which may affect the battery performance.

In view of this, the embodiments of the present application provide a technical solution, by providing a support member in the winding structure formed by the first electrode plate and the second electrode plate are wound in the winding direction, and at least a part of the support member is bent and arranged in the winding structure, and the support is configured to provide a support force to the part of the first electrode plate and/or the second electrode plate at the outer side of the support member, so that the electrode plate at the outer side of the support member are not easy to shrink and deform inward, which improves the structural stability of the entire electrode assembly, and ensures the battery performance.

The technical solution described in the embodiment of the present application is applicable to a battery cell, a battery including a battery cell and a power consumption device using the battery.

The power consumption device may be vehicles, mobile phones, portable devices, notebook computers, ships, spacecraft, electric toys, electric tools, or the like. The vehicle may be fuel vehicles, gas vehicles or new energy vehicles; new energy vehicles may be pure electric vehicles, hybrid vehicles or extended range vehicles, etc.; the spacecrafts include airplanes, rockets, space shuttles and spaceships, etc.; the electric toys include fixed or mobile electric toys, such as game consoles, electric vehicle toys, electric ship toys and electric airplane toys, etc.; the electric tools include metal cutting power tools, grinding power tools, assembly power tools and railway power tools, such as electric drills, electric grinders, electric wrenches, electric screwdrivers, electric hammers, impact drills, concrete vibrators, and electric planers, etc. The embodiment of the present application does not impose special restrictions on the above power consumption devices.

For the convenience of description, the following embodiments take a vehicle as an example of the power consumption device for description.

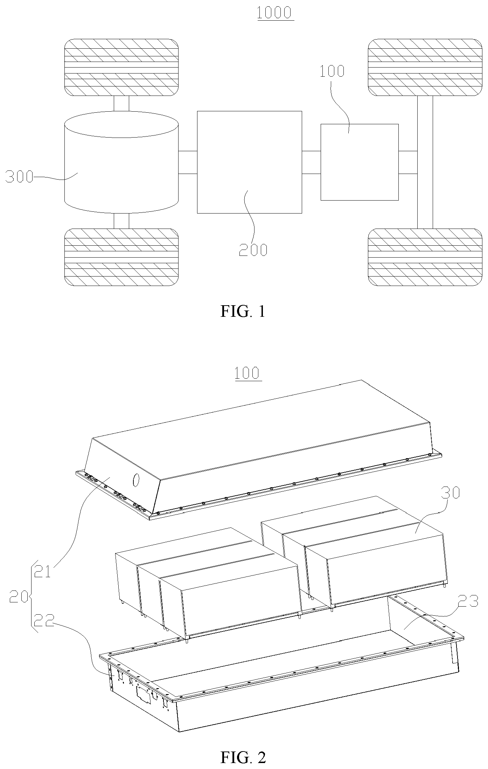

Please refer to FIG. 1. FIG. 1 is a schematic structural diagram of a vehicle 1000 provided by some embodiments of the present application. A battery 100 is provided inside the vehicle 1000, and the battery 100 may be provided at the bottom, head, or tail of the vehicle 1000. The battery 100 may be used for power supply of the vehicle 1000, for example, the battery 100 may be used as an operating power source of the vehicle 1000.

The vehicle 1000 further includes a controller 200 and a motor 300. The controller 200 is configured to control the battery 100 to supply power to the motor 300, for example, for starting, navigating, and working power requirements during driving of the vehicle 1000.

In some embodiments of the present application, the battery 100 may serve not only as an operation power source of the vehicle 1000, but also as a driving power source of the vehicle 1000, replacing or partially replacing fuel or natural gas to provide driving power for the vehicle 1000.

Please refer to FIG. 2. FIG. 2 is an exploded view of a battery 100 provided by some embodiments of the present application. The battery 100 includes a battery cell 10 (not shown in FIG. 2). The battery 100 may further include a box body 20 to accommodate the battery cell 10.

The box body 20 is configured to accommodate the battery cell 10, and the box body 20 may have various structural forms.

In some embodiments, the box body 20 may include a first portion 21 and a second portion 22, the first portion 21 and the second portion 22 are mutually covered, and the first portion 21 and the second portion 22 together define an accommodating space 23 for accommodating the battery cell 10. The first portion 21 and the second portion 22 may also be a hollow structure with one side open, and the opening side of the first portion 21 covers the opening side of the second portion 22 to form the box body 20 with the accommodating space 23. A sealing member may also be provided between the first portion 21 and the second portion 22 to achieve a sealed connection between the first portion 21 and the second portion 22.

In practical applications, the first portion 21 can be covered on the top of the second portion 22, the first portion 21 can also be referred to as an upper box body, and the second portion 22 can also be referred to as a lower box body.

The first portion 21 and the second portion 22 may have various shapes, such as a cylinder, a cuboid, and the like. In FIG. 2, exemplarily, the first portion 21 and the second portion 22 are both cuboid structures.

In the battery 100, there may be one or more battery cells 10. If there are a plurality of battery cells 10, the plurality of battery cells 10 may be connected in series or in parallel or in parallel-series. The parallel-series connection means that the connections of the plurality of battery cells 10 include both series connection and parallel connection. The plurality of battery cells 10 may be directly connected in series or in parallel or in parallel-series, and then a whole formed by the plurality of battery cells 10 may be accommodated in the box body 20; of course, the plurality of battery cells 10 may also be first connected in series, or in parallel or in parallel-series to form a battery module 30; then a plurality of battery modules 30 are connected in series or in parallel or in parallel-series to form as a whole, and are accommodated inside the box body 20.

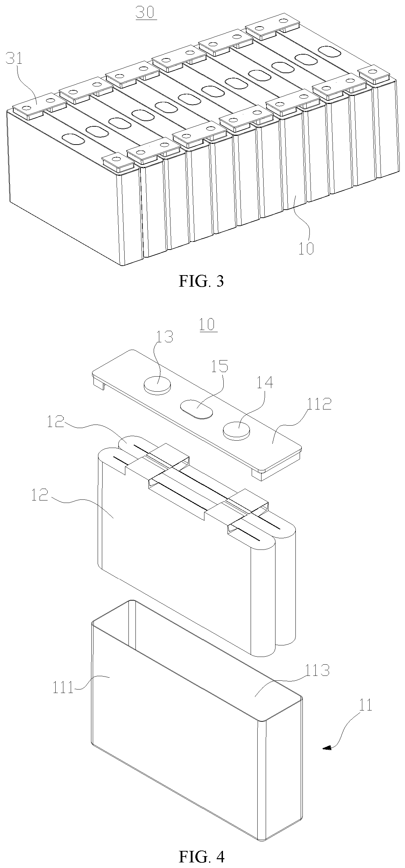

In some embodiments, please refer to FIG. 3. FIG. 3 is a schematic structural diagram of the battery module 30 shown in FIG. 2. In the battery 100, there are a plurality of battery cells 10, and the plurality of battery cells 10 are connected in series or in parallel or in parallel-series to form a battery module 30, and the plurality of battery modules 30 are then connected in series or in parallel or in parallel-series to form an entirety, and are accommodated in the box body20.

In some embodiments, the plurality of battery cells 10 in the battery module 30 may be electrically connected through the busbar component 31 to realize the parallel connection, series connection, or parallel-series connection of the plurality of battery cells 10 in the battery module 30.

Exemplarily, as shown in FIG. 3, the battery module 30 includes twelve battery cells 10, and the twelve battery cells 10 are connected in series by a busbar component 31.

Please refer to FIG. 4. FIG. 4 is an exploded view of the battery cell 10 shown in FIG. 3. The battery cell 10 includes a shell 11 and an electrode assembly 12, and the electrode assembly 12 is accommodated in the shell 11.

The shell 11 is configured to accommodate the battery cells 10, and the shell 11 can also be configured to accommodate the electrolyte. The shell 11 may have various structures.

In some embodiments, the shell 11 may include a housing 111 and a cover body 112. The housing 111 is a hollow structure with one side open. The cover body 112 covers the opening of the housing 111 and forms a sealed connection to form a sealed space 113 for accommodating the electrode assembly 12 and the electrolyte. When the battery cell 10 is assembled, the electrode assembly 12 may be first put into the housing 111, the housing 111 is filled with the electrolyte, and then the cover body 112 covers the opening of the housing 111.

The housing 111 may have various shapes, such as a cylinder, a cuboid, etc. The shape of the housing 111 may be determined according to a specific shape of the electrode assembly 12. For example, if the electrode assembly 12 has a cylindrical structure, a cylindrical housing 111 may be selected; if the electrode assembly 12 has a cuboid structure, a cuboid housing 111 may be selected. Of course, the cover body 112 may also have various structures, for example, the cover body 112 has a plate-shaped structure, a hollow structure with one end open, etc. Exemplarily, in FIG. 4, the housing 111 has a cuboid structure, the cover body 112 has a plate-shaped structure, and the cover body 112 covers the opening at the top of the housing 111.

In some embodiments, the battery cell 10 may further include a positive electrode terminal 13 and a negative electrode terminal 14. The positive electrode terminal 13 and the negative electrode terminal 14 are both mounted on the cover 112, and the positive electrode terminal 13 and the negative electrode terminal 14 are electrically connected with the electrode assembly 12 to output the electric energy generated by the electrode assembly 12.

In some implementations, the battery cell 10 may further include a pressure relief mechanism 15 mounted on the cover 112, and the pressure relief mechanism 15 is configured to discharge the pressure inside the battery 10 when the internal pressure or temperature of the battery cell 10 reaches a predetermined value.

Exemplarily, the pressure relief mechanism 15 may be a component such as an explosion-proof valve, a rupture plate, a gas valve, a pressure relief valve, or a safety valve and like.

It should be noted that in the battery cell 10, there may be one or more electrode assemblies 12 accommodated in the shell 11. Exemplarily, in FIG. 4, there are two electrode assemblies 12 accommodated in the shell 11.

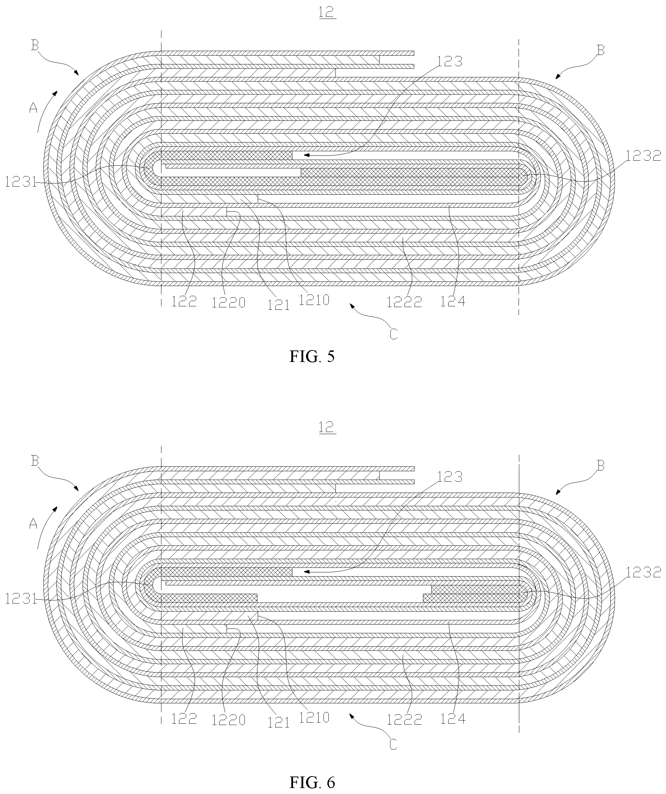

Please refer to FIG. 5. FIG. 5 is a schematic structural diagram of an electrode assembly 12 provided by some embodiments of the present application. The electrode assembly 12 includes a first electrode plate 121, a second electrode plate 122, and a support member 123. The first electrode plate 121 and the second electrode plate 121 are wound along the winding direction A to forms a winding structure, and the winding structure includes a bending area B. At least a part of the support member 123 is bent and arranged in the bending area B, and the support member 123 is configured to provide a support force to the part of the first electrode plate 121 and/or the second electrode plate 122 located at the outer side of the support member 123.

A support member 123 is provided in the winding structure, and at least a part of the support member 123 is bent and arranged in the bending area B. The support member 123 may provide a support force to the part of the first electrode plate 121 and/or the second electrode plate 122 located at the outer side of the support member 123. That is, the support member 123 can provide a support force to the electrode plates located at its outer side, and play a role of supporting, so that the electrode plates located at the outer side of the support member 123 are not easy to shrink and deform inward, and the electrode plates are not easy to be twisted, folded, broken, or damaged, which improves the structural stability of the entire electrode assembly 12 and ensures the performance of the battery 100.

In addition, since the support member 123 can provide a support force to the electrode plates at its outer side, so that the size of the gap between the first electrode plate 121 and the second electrode plate 122 can be within a predetermined range, effectively reducing the occurrence of lithium plating phenomenon.

It should be noted that the support member 123 is configured to provide a support force to the part of the first electrode plate 121 and/or the second electrode plate 122 located at the outer side of the support member 123. It is understandable that the support member 123 may only be configured to provide the support force to the first electrode plate 121 at its outer side, or only be configured to provide the support force to the second electrode plate 122 at its outer side, or simultaneously be configured to provide the support force to the first electrode plate 121 and the second electrode plate 122 at its outer side.

For example, the electrode plate located at the outer side of the support member 123 and adjacent to the support member 123 is the first electrode plate 121. It may be that the support member 123 only provide the support force to the first electrode plate 121, but not the second electrode plate 122. Or it may further be that the support member 123 not only provides the support force to the first electrode plate 121, but also provides the support force to the second electrode plate 122. For example, after the support member 123 provides the support force to the first electrode plate 121, the support force is transferred to the second electrode plate 122 through the first electrode plate 121.

For another example, the electrode plate located at the outer side of the support member 123 and adjacent to the support member 123 is the second electrode plate 122. It may be that the support member 123 only provide the support force to the second electrode plate 122, but not the first electrode plate 121. Or it may be that the support member 123 not only provides the support force to the second electrode plate 122, but also provides support to the first electrode plate 121. For example, after the support member 123 provides the support force to the electrode plate 122, the support force is transferred to the first electrode plate 121 though the second electrode plate 122.

The winding direction A is the direction in which the first electrode plate 121 and the second electrode plate 122 are wound circumferentially from the inside to the outside. In FIG. 5, the winding direction A is the clockwise direction.

It is understandable that the first electrode plate 121 and the second electrode plate 122 are two electrode plates with opposite polarities. It may be that the first electrode plate 121 is a positive electrode plate, and the second electrode plate 122 is a negative electrode plate. Or it may be that the first electrode plate 121 is a negative electrode plate, and the second electrode plate 122 is a positive electrode plate. The electrode plate at the innermost side of the bending area B may be the first electrode plate 121 or the second electrode plate 122.

Exemplarily, the positive electrode plate includes a positive electrode current collector and a positive active substance layer. The positive active substance layer is coated on a surface of the positive electrode current collector, and the positive current collector not coated with the positive active substance layer protrudes from the positive electrode current collector coated with the positive active substance layer and the positive current collector not coated with the positive active substance layer is used as a positive electrode tab (not shown in the Figure). The negative electrode plate includes a negative electrode current collector and a negative active substance layer. The negative active substance layer is coated on a surface of the negative electrode current collector, and the negative electrode current collector not coated with the negative active substance layer protrudes from the negative electrode current collector coated with the negative active substance layer and is used as a negative electrode tab (not shown in the Figure). Here, the positive electrode tab is configured to electrically connect with the positive electrode terminal 13 (refer to FIG. 4), and the negative electrode tab is configured to electrically connect with the negative electrode terminal 14 (refer to FIG. 4).

The winding structure further includes a straight area C, and the straight area C is connected to the bending area B. It may be that the opposite ends of the straight area C are provided with the bending area B. The straight area C is an area where the winding structure has a straight structure. A part of the first electrode plate 121 located in the straight area C and a part of the second electrode plate 122 located in the straight area C are both arranged substantially straight. The thickness direction of the part of the first electrode plate 121 located in the straight area C is the thickness direction of the electrode assembly 12. The thickness direction is the stacking direction of the part of the first electrode plate 121 located in the straight area C and the part of the second electrode plate 122 located in the straight area C. The bending area B is the region where the winding structure has a bending structure. The bending area B is bent and arranged relative to the straight area C. The part of the first electrode plate 121 located in the bending area B and the part of the second electrode plate 122 located in the bending area B are all bent and distributed. Exemplarily, the part of the first electrode plate 121 located in the bending area B and the part of the second electrode plate 122 located in the bending area B are arc-shaped.

It should be noted that at least a part of the support member 123 is bent and arranged in the bending area B. It may be that at least a part of the support member 123 is bent and arranged in one bending area B, or at least a part of the support member 123 is bent and arranged in two bending areas B.

In some embodiments, the electrode assembly 12 may further include a separator 124 for isolating the first electrode plate 121 from the second electrode plate 122 to reduce the risk of a short circuit between the first electrode plate 121 and the second electrode plate 122.

A material of the separator 124 may be PP (polypropylene) or PE (polyethylene), etc.

Exemplarily, the separator 124 has two layers, and the separator 124, the first electrode plate 121, the separator 124, and the second electrode plate 122 are stacked in order and then wound around the winding direction A to form a winding structure.

In some embodiments, the support member 123 may be fixed to the separator 124 to improve the stability of the support member 123 in the winding structure.

Before the first electrode plate 121, the separator 124, and the second electrode plate 122 are wound in the winding direction A to form a winding structure, the support member 123 is fixed on the separator 124, and after the first electrode plate 121, the separator 124 and the second electrode plate 122 are wound along the winding direction A to form a winding structure, the support member 123 can support the electrode plates at its outer side.

The support member 123 may be fixed to the separator 124 in a variety of ways, for example, the support member 123 is fixed to the separator 124 by means of bonding (adhesion), pressing, heat compounding.

It should be noted that in other embodiments, the support member 123 may also be fixed on the first electrode plate 121 or the second electrode plate 122, for example, the support member 123 is bonded to the first electrode plate 121 or the second electrode plate 122. Of course, the support member 123 may not be fixed to any one of the first electrode plate 121, the second electrode plate 122, and the separator 124. For example, after the support member 123 is bent and arranged in the winding structure, the support member 123 only keeps in contact with the first electrode plate 121, the second electrode plate 122 or the separator 124.

In some embodiments, the material of the support member 123 includes an elastic material. That is, the support member 123 is an elastic member, and the support member 123 has the ability of elastic deformation and restoration of elastic deformation. The part of the support member 123 that is bent and arranged in the bending area B can provide an elastic force to the electrode plate at its outer side, so that the electrode plate has a tendency to expand outward, thereby reducing the deformation amount of the electrode plate inward shrinking and deforming.

The support member 123 may be a metal elastic sheet, a plastic elastic sheet, or the like. Of course, the material of the support member 123 can also be the same as the material of the separator 124, and the hardness of the support member 123 can be greater than the hardness of the separator 124, so that the support member 123 has elasticity to support the electrode plate. For example, the material of the support member 123 and the material of the separator 124 are both PP (polypropylene), and for another example, the material of the support member 123 and the material of the separator 124 are both PE (polyethylene).

In some embodiments, the support member 123 is provided with at least one through hole (not shown in the figure). On one hand, this structure makes the support member 123 compressible, and the compressed space can be configured to put more active materials in the battery cell 10, thereby increasing the capacity of the battery cell 10 and volume energy density; on the other hand, the weight of the support member 123 can be reduced.

There may be one or more through holes on the support member 123.

Exemplarily, the support member 123 is provided with a plurality of through holes, and the porosity of the support member 123 is 20%-90%, that is, the support member 123 has a porous structure. The support member 123 may be a porous material, for example, the support member 123 is a porous PP (polypropylene) film or a porous PE (polyethylene) film. The porosity of the support member 123 referred to here is the percentage of the total volume of all the through holes on the support member 123 to the total volume of the support member 123.

In some embodiments, the second electrode plate 122 includes a first lap 1222 that is wound one lap in the winding direction A from its winding start end, and the support member 123 is located in the first lap 1222. This structure reduces risks of the support member 123 obstructing lithium-ion transmission between the first electrode plate 121 and the second electrode plate 122.

For the convenience of description, the winding start end of the first electrode plate 121 is defined as the first winding start end 1210, and the first winding start end 1210 is a feeding end of the first electrode plate 121, that is, a free end of the first electrode plate 121 at its innermost circle; the winding start end of the second electrode plate 122 is defined as the second winding start end 1220, and the second winding start end 1220 is a feeding end of the second electrode plate 122, that is, a free end of the second electrode plate 122 at its innermost circle.

Taking the second winding start end 1220 in the straight area C as an example, a start point of the first lap 1222 is the second winding start end 1220, and an end point of the first circle 1222 is located at the outer side of the second winding start end 1220. The end point and the start point of a circle 1222 are level in the thickness direction of the second electrode plate 122.

In the present embodiment, the electrode plate at the innermost side of the bending area B may be the first electrode plate 121 or the second electrode plate 122.

In some embodiments, please continue to refer to FIG. 5, an electrode plate at the innermost side of the bending area B is a first electrode plate 121, and at least a part of the support member 123 is bent and arranged in the bending area B, and the first electrode plate 121 located at the innermost side of the bending area B is supported by the support member 123.

The electrode plate at innermost side of the bending area B is the first electrode plate 121, and the part of the first electrode plate 123 located in the innermost side of the bending area B is supported by the part of the support member 123 that is bent and arranged in the bending area B, so that the part of the support member 123 bent and arranged in the bending area B can provide a support force to the first electrode plate 121 from the innermost side of the bending area B, so that the electrode plates at the innermost circle or even multiple circles in the winding structure are not easily deformed.

In the present embodiment, it may be that the first electrode plate 121 is a positive electrode plate, and the second electrode plate 122 is a negative electrode plate. Or it may be that the first electrode plate 121 is a negative electrode plate, and the second electrode plate 122 is a positive electrode plate.

Exemplarily, in FIG. 5, the first electrode plate 121 is a negative electrode plate, and the second electrode plate 122 is a positive electrode plate. Since the electrode plate at the innermost side of the bending area B is the first electrode plate 121, the first electrode plate 121 is a negative electrode plate, that is, the electrode plate at the innermost side of the bending area B is a negative electrode plate, so that the negative electrode plate has a part opposite to the innermost circle of the positive electrode late, which ensures that lithium-ions are disembedded from the innermost circle of the positive electrode plate and can be embedded in the negative electrode plate during charging, and can effectively reduce the occurrence of lithium plating phenomenon.

In some embodiments, a part of the support member 123 is arranged in the straight area C to support the part of the electrode plate located in the straight area C and at the outer side of the support member 123.

Since a part of the support member 123 is arranged in the straight area C, a part of the support member 123 is arranged in the bending area B, that is, the support member 123 can not only support the part of the electrode plate located in the bending area B, but also support the part of the electrode plate located in the straight area C, so that the support member 123 has a better support effect on the electrode plate.

In some embodiments, the support member 123 includes a first support portion 1231 and a second support portion 1232. At least a part of the first support portion 1231 is bent and arranged in one bending area B, and at least a part of the second support portion 1232 is bent and arranged in another bending area B. The first support portion 1231 and the second support portion 1232 can respectively support the electrode plate in two bending area B and so that the parts of the electrode plate located in the two bending areas B are not easily deformed.

In some embodiments, as shown in FIG. 5, the first support portion 1231 and the second support portion 1232 may be an integral structure, so that the support member 123 has a good integrity, so as to simplify the structure of the support member 123 and easy to form and manufacture. In some embodiments, please refer to FIG. 6. FIG. 6 is a schematic diagram of the structure of an electrode assembly 12 provided by other embodiments of the application. The first support portion 1231 and the second support portion 1232 can also be independent of each other, and the support member 123 is a multi-segment split structure, which can effectively reduce an amount of the support member 123 and achieve the purpose of saving materials.

In some embodiments, at least a part of the first support portion 1231 and/or at least a part of the second support portion 1232 support the electrode plate located at the innermost side of the bending area B.

If the first support portion 1231 supports at least a part of the electrode plate located at the innermost side of the bending area B, the first support portion 1231 can provide a support force to the electrode plate from the innermost side of the bending area B; if the second support portion 1232 supports at least a portion of the electrode plate located at the innermost side of the bending area B, and the second support portion 1232 can provide a support force to the electrode plate from the innermost side of the bending area B.

Exemplarily, in FIGS. 5 and 6, the electrode plate at the innermost side of the bending area B is the first electrode plate 121, at least a part of the first support portion 1231 and at least a part of the second support portion 1232 support the first electrode plate 121.

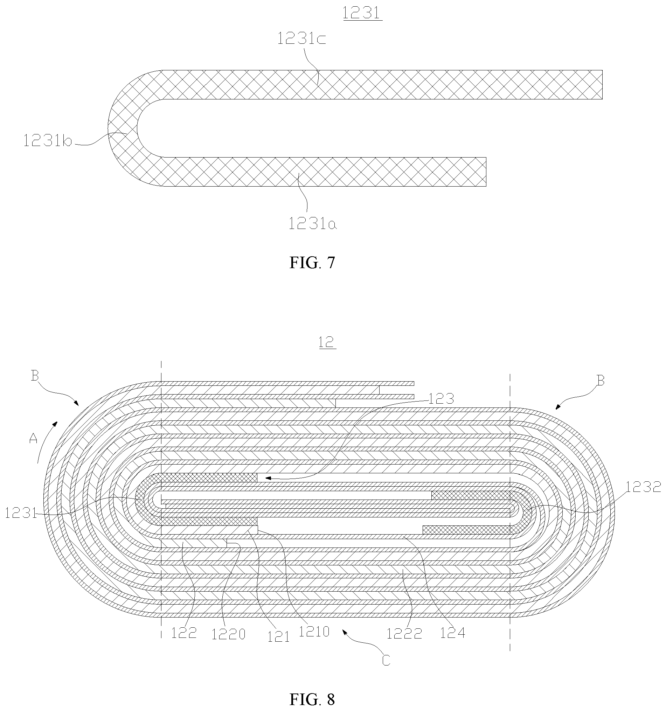

In the support member 123, the first support portion 1231 and the second support portion may have various structures. Taking the first support portion 1231 and the second support portion 1232 of the support member 123 as being independent of each other as an example, please refer to FIG. 7. FIG. 7 is a schematic structural diagram of the first support portion 1231 shown in FIG. 6. The first support portion 1231 may include a first straight portion 1231a, a first bending portion 1231b and a second straight portion 1231c. The first straight portion 1231a, the first bending portion 1231b, and the second straight portion 1231c are sequentially connected to form a U-shaped structure. The first straight portion 1231a and the second straight portion 1231c are both straight areas C (refer to FIG. 6), and the first bending portion 1231b is bent and arranged in the bending area B (refer to FIG. 6). Exemplarily, the first bending portion 1231b is arc-shaped. A central angle of the arc where the first bending portion 1231b is located is 180 degrees. After the first bending portion 1231b is bent and arranged in the bending area B, the axis of the first bending portion 1231b may be parallel to or coincide with the axis of the first electrode plate 121 located at the innermost side of the bending area B.

Of course, the structure of the first support portion 1231 is not limited to the above structure. The first support portion 1231 may also have other structural forms. For example, the first support portion 1231 only includes the first bending portion 1231b, then the first support portion 1231 does not have a part located in the straight area C. For another example, the first support portion 1231 only includes the first straight portion 1231a and the first bending portion 1231b. A central angle of the arc where the first bending portion 1231b is located is not necessarily 180 degrees, and may also be other angles, such as 45 degrees, 90 degrees, and so on.

The first support portion 1231 and the second support portion 1232 respectively play a support role in the two bending areas B. The second support portion 1232 may have the same structure as the first support portion 1231, and will not be repeated here.

It should be noted that, in the embodiment of the present application, the support member 123 may directly support or indirectly support the electrode plate at its the outer side. Taking the electrode plate located at the innermost side of the bending area B supported by the support member 123 is the first electrode plate 121 as an example, as shown in FIGS. 5 and 6. The support member 123 may support the first electrode plate 121 through the separator 124, thereby indirectly providing a support force to the first electrode plate 121. For example, the first support portion 1231 and the second support portion 1232 are both support the first electrode plate 121 through the separator 124. The support member 123 can also directly touch the first electrode plate 121 to directly support the first electrode plate 121, thereby directly providing a support force to the first electrode plate 121. For example, the first support portion 1231 and the second support portion 1232 both directly support the first electrode plate 121. Of course, please refer to FIG. 8. FIG. 8 is a schematic structural diagram of the electrode assembly 12 provided by another embodiment of the application. It may also be that a part of the support member 123 directly supports the first electrode plate 121, and a part of the support member 123 indirectly supports the first electrode plate 121 through the separator 124. For example, the first support portion 1231 directly supports the first electrode plate 121, and the second support portion 1232 indirectly supports the first electrode plate 121 through the separator 124.

Of course, it can be seen from the above embodiment that the support member 123 can be a structure that supports the electrode plates in the two bending areas B. The support member 123 is not limited to the above structure, and the support member 123 can also have other structures. For example, the support member 123 only includes the first support portion 1231 or the second support portion 1232. That is, the support member 123 only supports the electrode plate in one bending area B.

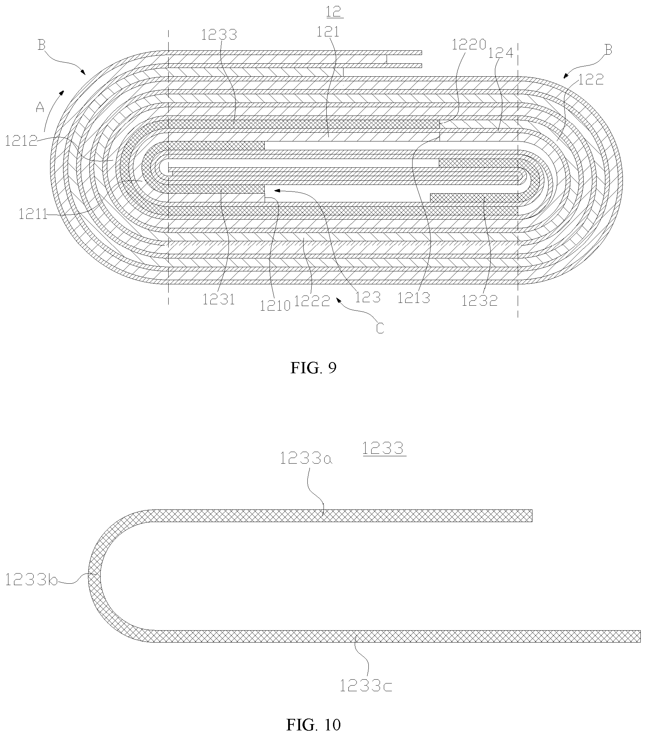

In some embodiments, please refer to FIG. 9. FIG. 9 is a schematic diagram of the structure of the electrode assembly 12 provided by another embodiment of the application. In the case where the electrode plate at the innermost side of the bending area B is the first electrode plate 121, the first electrode plate 121 may include a first segment 1211 and a second segment 1212 bordering the first segment 1211. The first segment 1211 exceeds the winding start end of the second electrode plate 122 (the second winding start end 1220). The first segment 1211 is wound from the winding start end of the first electrode plate 121 (the first winding start end 1210) along the winding direction A around the bending area B. The second segment 1212 is continuously arranged with the first segment 1211 along the winding direction A. The support member 123 includes a third support portion 1233, the second segment 1212 has an outer side portion located at an outer side the first segment 1211 and adjacent to the first segment 1211, and at least a part of the third support portion 1233 is bent and arranged in the bending area B and located between the outer side portion and the first segment 1211.

The part of the third support portion 1233 that is bent and arranged in the bending area B is located between the second segment 1212 and the first segment 1211. On one hand, the third support portion 1233 fills at least a part of the gap between the first segment 1211 and the second segment 1212, to ensure the uniformity of the thickness of the entire electrode assembly 12; on the other hand, the part of the third support portion 1233 that is bent and arranged in the bending area B can provide a support force to the second segment 1212.

Here, the first segment 1211 and the second segment 1212 may be an integral structure. The junction of the first segment 1211 and the second segment 1212 is a first junction 1213. The winding start end of the second electrode plate 122 (the second winding start end 1220) is located at the outer side of the first junction 1213. In the thickness direction of the first electrode plate 121, the first junction 1213 is level with the winding start end (the second winding start end 1220) of the second electrode plate 122.

In the present embodiment, the support member 123 may only include the third support portion 1233. As shown in FIG. 9, the support member 123 may also include a first support portion 1231, a second support portion 1232 and a third support portion 1233.

Of course, the first support portion 1231, the second support portion 1232, and the third support portion 1233 may be an integral structure or a split structure. If the first support portion 1231, the second support portion 1232, and the third support portion 1233 are of a split structure, the support member 123 may also be divided into two segments. For example, the third support portion 1233 is one segment, and the first support portion 1231 and the second support portions 1232 are an integral structure to form another segment. As shown in FIG. 9, the support member 123 can be divided into three segments, namely a first support portion 1231, a second support portion 1232 and a third support portion 1233.

The third support portion 1233 may directly supports or indirectly support the second segment 1212. For example, the third support member 123 indirectly supports the second segment 1212 through the separator 124.

In some embodiments, please refer to FIG. 10. FIG. 10 is a schematic structural diagram of the third support portion 1233 shown in FIG. 9. The third support portion 1233 may include a third straight portion 1233a, a second bending portion 1233b and a fourth straight portion 1233c. The third straight portion 1233a, the second bending portion 1233b, and the fourth straight portion 1233c are sequentially connected to form a U-shaped structure. The third straight portion 1233a and the fourth straight portion 1233c are both straight areas C (refer to FIG. 9), and the second bending portion 1233b is bent and arranged in the bending area B (refer to FIG. 9) to provide a support force to the part of the second segment 1212 located at the outer side of the second bending portion 1233b. Exemplarily, the second bending portion 1233b is arc-shaped. A central angle of the arc where the second bending portion 1233b is located is 180 degrees, and after the second bending portion 1233b is bent and arranged in the bending area B, and the axis of the second bending portion 1233b may be parallel or coincident with the axis of the part of the second segment 1212 located in the bending area B and adjacent to the second bending portion 1233b.

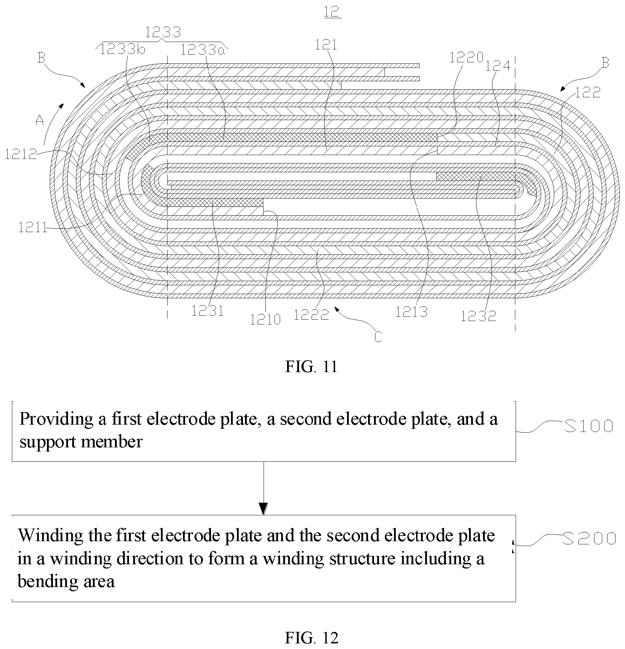

Of course, the structure of the third support portion 1233 is not limited to the above structure. The third support portion 1233 may also have other structural forms. For example, the third support portion 1233 only includes the second bending portion 1233b, then the third support portion 1233 does not have a part located in the straight area C. For another example, please refer to FIG. 11. FIG. 11 is a schematic diagram of the structure of the electrode assembly 12 provided by some other embodiments of the application. The third support portion 1233 only includes the third straight portion 1233a and the second bending portion 1233b. A central angle of the arc where the second bending portion 1233b is located is not necessarily 180 degrees, and may also be other angles, such as 45 degrees, 90 degrees, and so on.

In some embodiments, as shown in FIGS. 9 and 11, one end of the third support portion 1233 is attached to the winding start end (the second winding start end 1220) of the second electrode plate 122.

One end of the third support portion 1233 is attached to the winding start end (the second winding start end 1220) of the second electrode plate 122, which eliminates the gap between an end portion of the third support portion 1233 and the winding start end (the second winding start end 1220) of the second electrode plate 122, and increases a support span of the third support portion 1233 to the second segment 1212, so that the third support portion 1233 has a better support capacity for the second segment 1212.

It should be noted that one end of the third support portion 1233 is attached to the winding start end of the second electrode plate 122 (the second winding start end 1220). It may be that the end of the third support portion 1233 and the winding start end (the second winding start end 1220) of the second electrode plate 122 can be abutted against each other, but are not fixed together. It may further be that the end of the third support portion 1233 is fixed to the winding start end of the second electrode plate 122 (the second winding start end 1220). For example, one end of the third support portion 1233 and the winding starting end of the second electrode plate 122 (the second winding starting end 1220) are bonded together.

Please refer to FIG. 12. FIG. 12 is a flowchart of a manufacturing method for the electrode assembly 12 provided by some embodiments of the present application. The manufacturing method for the electrode assembly 12 includes:
S100: providing a first electrode plate 121, a second electrode plate 122 and a support member 123;
S200: winding the first electrode plate 121 and the second electrode plate 122 along the winding direction A to form a winding structure including a bending area B;

Here, at least a part of the support member 123 is bent and arranged in the bending area B, and the support member 123 is configured to provide a support force to the part of the first electrode plate 121 and/or the second electrode plate 122 located at the outer side of the support member 123.

After the first electrode 121 and the second electrode 122 are wound in a winding direction A to form a winding structure, and the support member plays a supporting role for the electrode plate, so that support member 123 can provide a support force to the part of the first electrode plate 121 and/or the second electrode plate 122 located at the outer sided of the support member 123, that is, the support member provides a support force to an electrode plate located at the outer side of the support member 123 and plays a supporting role, so that the electrode plate at the outer side of the support member 123 is not easy to shrink and deform inward, the structural stability of the entire electrode assembly 12 is improved, and the battery 100 performance is ensured.

In some embodiments, a separator 124 for isolating the first electrode plate 121 from the second electrode plate 122 is further provided, and the first electrode plate 121, the separator 124, and the second electrode plate 122 are wound along the winding direction A to form a winding structure.

In some embodiments, the manufacturing method for the electrode assembly 12 may further include:
fixing the support member 123 to the separator 124, before the first electrode plate 121, the separator 124, and the second electrode plate 122 are wound in the winding direction A to form the winding structure.

The support member 123 is able to automatically support the electrode plates at its outer side, after the first electrode plate 121, the separator 124 and the second electrode plate 122 are wound along the winding direction to form a winding structure.

Here, the support member 123 is fixed to the separator 124 by means of bonding, pressing or heat compounding.

It should be noted that, for the related structure of the electrode assembly 12 manufactured by the above electrode assembly 12, please refer to the electrode assembly 12 provided in the above respective embodiments.

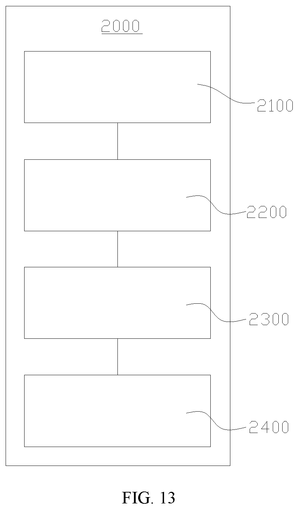

Please refer to FIG. 13. FIG. 13 is a schematic block diagram of a manufacturing device 2000 for an electrode assembly 12 provided by some embodiments of the application. The manufacturing device 2000 includes a first providing apparatus 2100, a second providing apparatus 2200, a third providing apparatus 2300, and an assembly apparatus 2400.

The first providing apparatus 2100 is configured to provide the first electrode plate 121. The second providing apparatus 2200 is configured to provide the second electrode plate 122. The third providing apparatus 2300 is configured to provide a support member 123. The assembly apparatus 2400 is configured to wind the first electrode plate 121 and the second electrode plate 122 along the winding direction A to form a winding structure.

Here, the winding structure includes a bending area B, at least a part of the support member 123 is bent and arranged in the bending area B, and the support member 123 is configured to provide a support force to the part of the first electrode plate 121 and/or the second electrode plate 122 located at the outer side of the support member 123.

In some embodiments, the manufacturing device 2000 further includes a fourth providing apparatus (not shown in the figure), and the fourth providing apparatus is configured to provide an separator 124 that isolates the first electrode plate 121 from the second electrode plate 122. The assembly apparatus 2400 is configured to wind the first electrode plate 121, the separator 124, and the second electrode plate 122 along the winding direction A to form a winding structure.

For the related structure of the electrode assembly 12 manufactured by the above manufacturing device 2000, please refer to the electrode assembly 12 provided in the above respective embodiments.

It should be noted that, the embodiments in the present application and features in the embodiments may be mutually combined provided that no conflict is caused.

The above embodiments are merely used to illustrate the technical solution of the present application, but are not intended to limit the present application. For those skilled in the art, the present application may have various amendments and modifications. Any modification, equivalent replacement, or improvement made without departing from the spirit and principle of this application shall fall within the protection scope of this application.

The specification of the application is supplemented by the following numbered clauses, which are not to be taken to be claims.

Clause 1: An electrode assembly, comprising a first electrode plate, a second electrode plate, and a support member;
wherein the first electrode plate and the second electrode plate are wound in a winding direction to form a winding structure, and the winding structure comprises a bending area; and
at least a part of the support member is bent and arranged in the bending area, and the support member is configured to provide a support force to a part of the first electrode plate and/or the second electrode plate located at an outer side of the support member.

Clause 2: The electrode assembly according to clause 1, wherein the winding structure further comprises a straight area, and the straight area is connected to the bending area; and
a part of the support member is arranged in the straight area.

Clause 3: The electrode assembly according to clause 1 or 2, wherein the support member comprises a first support portion and a second support portion; and
at least a part of the first support portion is bent and arranged in one bending area, and at least a part of the second support portion is bent and arranged in the other bending area.

Clause 4: The electrode assembly according to clause 3, wherein the first support portion and the second support portion are an integral structure; or, the first support portion and the second support portion are independent of each other.

Clause 5: The electrode assembly according to clause 4, wherein an electrode plate located at the innermost side of the bending area is supported by at least a part of the first support portion and/or at least a part of the second support portion.

Clause 6: The electrode assembly according to any one of clauses 1 to 5, wherein the electrode plate at the innermost side of the bending area is a first electrode plate, and at least a part of the support member is bent and arranged in the bending area, and the first electrode plate at the innermost part of the bending area is supported by the support member.

Clause 7: The electrode assembly according to any one of clauses 1-6, wherein the electrode plate at the innermost side of the bending area is a first electrode plate, and the first electrode plate comprises a first segment and a second segment bordering the first segment, the first segment exceeds an winding start end of the second electrode plate, and the first segment is wound along the winding direction from an winding start end of the first electrode plate around the bending area, and the second segment is continuously arranged with the first segment along the winding direction;
the support member comprises a third support portion, the second segment has an outer side portion located at an outer side the first segment and adjacent to the first segment, and at least a part of the third support portion is bent and arranged in the bending area and located between the outer side portion and the first segment.

Clause 8: The electrode assembly according to clause 7, wherein one end of the third support portion is attached to the winding start end of the second electrode plate.

Clause 9: The electrode assembly according to any one of clauses 1-8, wherein the first electrode plate is a negative electrode plate, and the second electrode plate is a positive electrode plate.

Clause 10: The electrode assembly according to any one of clauses 1-9, wherein the second electrode plate comprises a first lap that is wound one lap in the winding direction from the winding start end of the second electrode plate, and the support member is located in the first lap.

Clause 11: The electrode assembly according to any one of clauses 1-10, wherein the electrode assembly further comprises a separator for isolating the first electrode plate from the second electrode plate, and the support member is fixed to the separator.

Clause 12: The electrode assembly according to any one of clauses 1-11, wherein a material of the support member comprises an elastic material.

Clause 13: The electrode assembly according to any one of clauses 1-12, wherein the support member is provided with at least one through hole.

Clause 14: The electrode assembly according to clause 13, wherein a porosity of the support member is 20%-90%.

Clause 15: A battery cell, comprising a shell and the electrode assembly according to any one of clauses 1-14; and
the electrode assembly being accommodated in the shell.

Clause 16: A battery, comprising a box body and the battery cell according to clause 15; and
the battery cell being accommodated in the box body.

Clause 17: A power consumption device, comprising the battery cell according to clause 15.

Clause 18: A manufacturing method for an electrode assembly, the method comprising:
providing a first electrode plate, a second electrode plate, and a support member;
winding the first electrode plate and the second electrode plate along a winding direction to form a winding structure comprising a bending area;
wherein at least a part of the support member is bent and arranged in the bending area, and the support member is configured to provide a support force to a part of the first electrode plate and/or the second electrode plate located at an outer side of the support member.

Clause 19: The manufacturing method for an electrode assembly according to clause 18, wherein an separator is provided for isolating the first electrode plate from the second electrode plate; and
the first electrode plate, the separator, and the second electrode plate are wound along the winding direction to form the winding structure.

Clause 20: The manufacturing method for an electrode assembly according to clause 19, wherein the method further comprises:
fixing the support member to the separator, before the first electrode plate, the separator, and the second electrode plate are wound in the winding direction to form the winding structure.

Clause 21: The manufacturing method for an electrode assembly according to clause 20, wherein the support member is fixed to the separator by means of bonding, pressing or heat compounding.

Clause 22: A manufacturing device for an electrode assembly, comprising:
a first providing apparatus, configured to provide a first electrode plate;
a second providing apparatus, configured to provide a second electrode plate;
a third providing apparatus, configured to provide a support member; and
an assembly apparatus, configured to wind the first electrode plate and the second electrode plate along a winding direction to form a winding structure;
wherein the winding structure comprises a bending area, at least a part of the support member is bent and arranged in the bending area, and the support member is configured to provide a support force to a part of the first electrode plate and/or the second electrode plate located at an outer side of the support member.

## Claims

1. An electrode assembly (12), comprising a first electrode plate (121), a second electrode plate (122), and a support member (123) having a first support portion (1231) and a second support portion (1232), wherein:
the first electrode plate (121) and the second electrode plate (122) are wound in a winding direction (A) to form a winding structure, the winding structure comprising a first bending area (B) and a second bending area (B); and
at least a part of the first support portion (1231) is bent and arranged in the first bending area (B), at least a part of the second support portion (1232) is bent and arranged in the second bending area (B), and the support member is configured to provide a support force to a part of the first electrode plate (121) and/or the second electrode plate (122) located at an outer side of the support member (123);
a part of the first electrode plate (121) or the second electrode plate (122) is located at the innermost side of the first bending area (B) and supported by at least a part of the first support portion (1231); and
a part of the first electrode plate (121) or the second electrode plate (122) is located at the innermost side of the second bending area (B) and supported by at least a part of the second support portion (1232).

2. The electrode assembly according to claim 1, wherein the winding structure further comprises a straight area, and the straight area is connected to the bending area (B); and
a part of the support member (123) is arranged in the straight area.

3. The electrode assembly according to claim 1 or 2, wherein the first support portion (1231) and the second support portion (1232) are an integral structure; or, the first support (1231) portion and the second support portion (1232) are independent of each other.

4. The electrode assembly according to any one of claims 1-3, wherein the electrode plate at the innermost side of the bending area (B) is the first electrode plate (121), and the first electrode plate (121) comprises a first segment and a second segment bordering the first segment, the first segment exceeds an winding start end of the second electrode plate (122), and the first segment is wound along the winding direction (A) from an winding start end of the first electrode plate (121) around the bending area (B), and the second segment is continuously arranged with the first segment along the winding direction (A);
the support member (123) comprises a third support portion (1233), the second segment has an outer side portion located at an outer side the first segment and adjacent to the first segment, and at least a part of the third support portion (1233) is bent and arranged in the bending area (B) and located between the outer side portion and the first segment.

5. The electrode assembly according to claim 4, wherein one end of the third support portion (1233) is attached to the winding start end of the second electrode plate (122).

6. The electrode assembly according to any one of claims 1-5, wherein the first electrode plate (121) is a negative electrode plate, and the second electrode plate (122) is a positive electrode plate.

7. The electrode assembly according to any one of claims 1-6, wherein the second electrode plate (122) comprises a first lap that is wound one lap in the winding direction (A) from the winding start end of the second electrode plate (122), and the support member (123) is located in the first lap,
wherein preferably the electrode assembly further comprises a separator for isolating the first electrode plate (121) from the second electrode plate (122), and the support member (123) is fixed to the separator,
wherein preferably a material of the support member (123) comprises an elastic material, and preferably the support member (123) is provided with at least one through hole.

8. The electrode assembly according to claim 7, wherein a porosity of the support member (123) is 20%-90%.

9. A battery cell, comprising a shell and the electrode assembly according to any one of claims 1-8,
the electrode assembly being accommodated in the shell.

10. A battery, comprising a box body and the battery cell according to claim 9,
the battery cell being accommodated in the box body.

11. A power consumption device, comprising the battery cell according to claim 9.

12. A manufacturing method for an electrode assembly, the method comprising:
providing a first electrode plate (121), a second electrode plate (122), and a support member (123) having a first support portion (1231) and a second support portion (1232);
winding the first electrode plate (121) and the second electrode plate (122) along a winding direction (A) to form a winding structure comprising a first bending area (B) and a second bending area (B);
wherein at least a part of the first support portion (1231) is bent and arranged in the first bending area (B), at least a part of the second support portion (1232) is bent and arranged in the second bending area (B), and the support member (123) is configured to provide a support force to a part of the first electrode plate (121) and/or the second electrode plate (122) located at an outer side of the support member(123);
a part of the first electrode plate (121) or the second electrode plate (122) is located at the innermost side of the first bending area (B) and supported by at least a part of the first support portion (1231); and
a part of the first electrode plate (121) or the second electrode plate (122) is located at the innermost side of the second bending area (B) and supported by at least a part of the second support portion (1232).

13. The manufacturing method for an electrode assembly according to claim 12, wherein a separator is provided for isolating the first electrode plate from the second electrode plate; and
the first electrode plate, the separator, and the second electrode plate are wound along the winding direction to form the winding structure.

14. The manufacturing method for an electrode assembly according to claim 13, wherein the method further comprises:
fixing the support member to the separator, before the first electrode plate, the separator, and the second electrode plate are wound in the winding direction to form the winding structure.

15. The manufacturing method for an electrode assembly according to claim 14, wherein the support member is fixed to the separator by means of bonding, pressing or heat compounding.
